# EUROPEAN PATENT APPLICATION

(11) **EP 3 944 163 A1**
(43) Date of publication of application: **26.01.2022**
(21) Application number: 20186678.7
(22) Date of filing: 20.07.2020
(51) Int. Cl.: G06Q 10/04, G06Q 10/08, G06Q 50/28

(54) **METHOD AND SYSTEMS FOR OPTIMIZING LOGISTICS**

(71) Applicant: Siemens Aktiengesellschaft, 80333 München (DE)
(72) Inventor: Demel, Frank, 91096 Möhrendorf (DE); Kleefeldt, Alexander, 91054 Erlangen (DE); Schiessel, Svenja, 90403 Nürnberg (DE)

(57) **Abstract**

A method of optimizing logistics of one or more products (D1-D5), preferably of different sizes, in a logistics facility (L), e.g., within a production facility (F), comprising: receiving a purchase order for the one or more products (D1-D5), determining a transport packaging (P) for the one or more products (D1-D5) before collecting the products (D1-D5) in the logistics facility (L), and subsequently collecting the products (D1-D5) in the logistics facility (L), wherein the step of collecting comprises putting the products (D1-D5) directly in the determined transport packaging (P).

## Description

### TECHNICAL FIELD

The present disclosure relates to an engineering, supply chain, logistics and production of products.

### BACKGROUND

In various materials handling facilities, it is often the case that products are shipped to various destinations using various packaging. For example, one facility may ship products purchased over the Internet to various customers. In order to ship products to their various destinations, a materials handling facility may include various types of packaging in which products are placed before shipment. The packaging serves to protect the products during shipment. Unfortunately, it is usually the case that the packaging used to ship a given product is not sized correctly, such that the packaging may be bigger than that necessary to ship the given product. This translates into lost space on trucks and other transportation vehicles that, as a result, carry less products than they could if the packaging matched the size of the products. Also, the mismatch between product sizes and packaging sizes can result in other costs.

From US patent US10332060B2 various systems, methods, and programs embodied in computer-readable mediums have become known for determining sizes of packaging in a packaging suite and generating the new packaging. The packaging may be used, for example, in the shipping of items. Data may be received that describes bounding boxes corresponding to collections of items shipped to customers. The sizes of the packaging in the packaging suite may be determined based at least in part upon the data that describes the bounding boxes.

Perhaps the single biggest factor in producing packaging for a product is that the packaging be designed to fit the contained product as precisely as possible. With a more precise fit, the contained item or product not only is less likely to be damaged, but the need for inner packaging is also reduced and possibly eliminated. In particular, when packaging materials such as corrugated cardboard are used to create a box or other packaging design, the materials are creased and folded as near to a right angle possible. Creasing and folding at right angles increases strength characteristics of the packaging materials (essentially exponentially), thereby giving a resulting box a correspondingly increased resistance to damage when stacked.

From US patent US9914278B2 methods, computer-readable media, and systems have become known that relate to producing on-demand packaging. For example, packaging can be automatically produced on-demand and be sized and configured for use with a customized set of items. In one aspect, a request for multiple items is received and a packaging customization engine accesses an information store that includes information about each of the requested items. The information may include dimensional information about the three-dimensional size of the items. The packaging customization engine may use the dimensional information to simulate a model arrangement of all of the requested items, and then calculate the dimensions of a box or other package that can provide a precise fit for the items when physically arranged consistent with the model arrangement.

An automatic determination of the packaging material for customer orders from products from a production facility as well as internal and external commercial goods is not possible due to incomplete and/or incorrect information on master data or historical data of the products (length, width, height, weight, direction of location). The effort required to generate and maintain these often widely varying master data (e.g. depending on supplier, supplier packaging) is very high. The type and size of the packaging materials used also vary greatly in order to meet the requirements regarding filling material and filling level.

Therefore several difficulties exist. First, internal and external data sources for own products and third-party products need to be maintained. Further, the master data is dynamic and dependent on the supplier's packaging process/strategy. Availability and maintenance of master data is not secured. Due to the high variability in the composition of customer orders there is only a limited amount of repetitive purchase orders.

Up till now packaging of one or more products is performed as described in the following: An employee stacks all the products required according to a purchase order on a table and then decides visually and according to experience which packaging material or which size is suitable. After the packaging has been determined, all products are touched again and inserted into the packaging. If the employee has incorrectly determined the packaging, the products will be unpacked again.

### SUMMARY

It is an object of the present invention to improve packaging of products, to minimize manual steps necessary when packaging products, to safe packaging material and to reduce data maintenance efforts. Of course, it is always an object to reduce costs to improve competitiveness.

The object is achieved according to the following aspects.

According to a first aspect a method of optimizing logistics of one or more products, preferably of different sizes, in a logistics facility, e.g., within a production facility, is proposed. The method comprising: receiving a purchase order for the one or more products, determining a transport packaging for the one or more products before collecting the products in the logistics facility, and subsequently collecting the products in the logistics facility, wherein the step of collecting comprises putting the products directly in the determined transport packaging.

According to a second aspect a method of training a machine learning model for associating a transport packaging with a purchase order is proposed. The method comprising: extracting one or more features of a purchase order and inputting, for training the machine learning model, the one or more features into the machine learning model for associating the features with a transport packaging.

Further aspects comprise a computer program product and a packaging station.

### BRIEF DESCRIPTION OF THE DRAWINGS

- Fig. 1: shows a schematic illustration of a production process, packaging of products and subsequent delivery.
- Fig. 2: shows a schematic illustration of the collection of products into a cart according to a purchase order.
- Fig. 3: shows a schematic illustration of the selection of suitable packaging for the products collected.
- Fig. 4: shows a schematic illustration of the collection of products directly into suitable packaging according to a first embodiment.
- Fig. 5: shows a schematic illustration of training and inference of a machine learning model.
- Fig. 6: shows a schematic illustration of the available data and the different packaging available.
- Fig. 7: illustrates exemplary method steps, in particular the data pipeline of the features extracted from a purchase order.
- Fig. 8: shows exemplary method steps according to a first embodiment.
- Fig. 9: shows exemplary method steps according to a second embodiment.
- Fig. 10: shows exemplary method steps according to a third embodiment.

### DETAILED DESCIRPTION

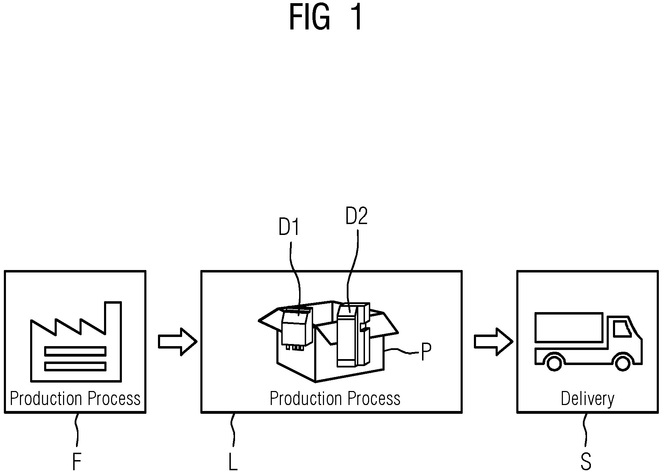

In a production facility F, e.g., a factory, as shown in Figure 1, products D1, D2 such as power-electronic frequency inverters or control units for tool machines or production plants are manufactured. In the production facility F one or more production processes each comprising multiple production steps may be executed. As a result of the production process(es) one or more products D1, D2 are obtained. The one or more products D1, D2 may be collected, e.g., together with other commercial goods, and packaged within a logistic facility L for shipment and delivery. Additionally, one or more packagings for packaging the products may be collected or are available at a packaging station within the logistics facility. In order to increase the efficiency of processes, the production facility may rely on the generation of smart data from big data and/or one or more software program comprising a machine learning model may be deployed in the production facility F.

The logistic facility L may be part of the production facility F, e.g., may be a certain area of the shop floor of the production facility F or may be integrated in the production facility F. However, the case may be that the logistic facility L is separate from the production facility F, i.e. located in another (but adjacent) geographical area. The packaged products may then be ready for delivery S or shipping.

A packaging P proposal for the employee packaging the one or more products D1, D2 may be the first step towards realizing a dynamic execution and handling of one or more purchase orders. Simple volume calculation however is not sufficient for the automated determination of the room-optimized packaging. Further, it is often not feasible to collect and maintain the data required to describe weight and dimensions of the one or more products D1, D2. Therefore, there is a need to develop new concepts, such as a system relying on machine learning, and to check for added value.

The present disclosure includes the concepts for the implementation of an automated packaging proposal.

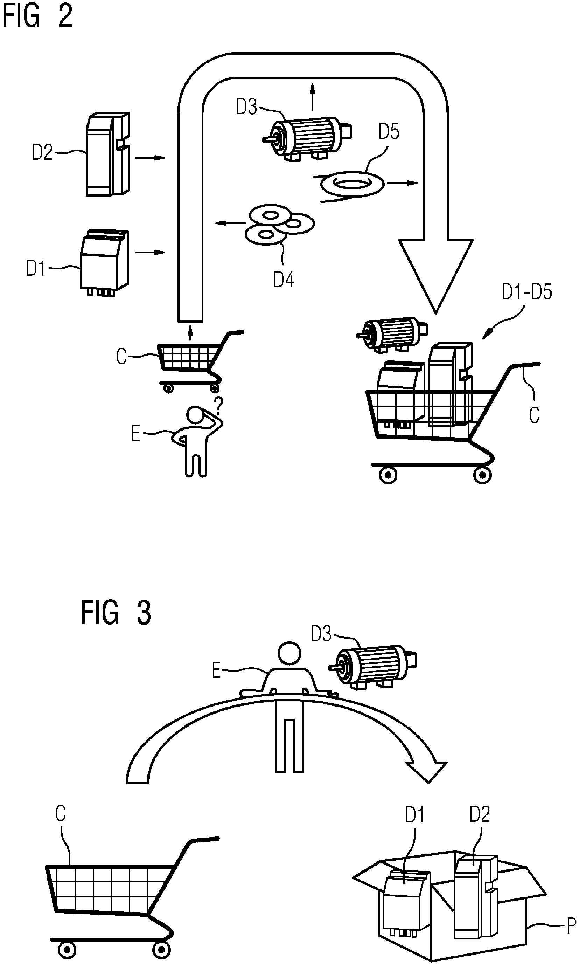

In Figure 2 collection of products D1-D5 into a cart C according to a purchase order is shown. A purchase order is a document indicating types and/or quantities, of products or services. It is used to control the purchasing of products and services from suppliers or to customers. Purchase orders may be part of enterprise resource planning system.

An employee E collects all the products D1-D5 required according to the purchase order into the cart C and inserts the products D1-D3 from the cart C into the packing P according to experience which packaging or which size is suitable, as shown in Figure 3. Alternatively, not shown, the employee E stacks the one or more products D1-D5, e.g., on a table, and then decides visually and according to experience which packaging P or which size is suitable. After the packaging P has been selected (usually cartboard), the products D1-D5 are touched again and inserted into the packaging. If the employee has miscalculated, the products D1-D5 need to be unpacked again and inserted in a more suitable packaging.

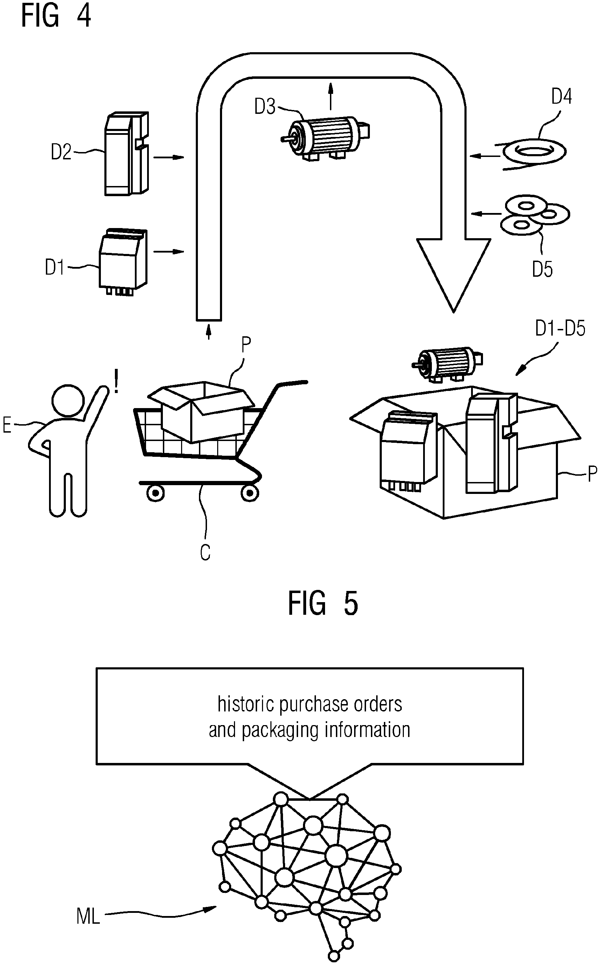

Fig. 4 shows a schematic illustration of the collection of products directly into suitable packaging P according to a first embodiment. Therein, packaging, such as a cardboard container, for a purchase order comprising one or more products D1-D5 is determined. The packaging P is provided to an employee E concerned with the purchase order and/or the packaging of the purchase order. The packaging P may be placed in a cart C for collecting the one or more products D1-D5. Subsequently the one or more products D1-D5 are collected, e.g. at different stations in the production facility F or logistic facility L. The order of collecting the one or more products may be determined by the material provision After collecting the one or more products D1-D5 and inserting them into the packaging P the products are ready for shipment or delivery. When collecting and packing the one or more products directly into the packaging, the heavy materials or products should be placed at the bottom of the packaging, e.g., carton. hence, heavy products may be collected first, then light products. Therefore, a difference may arise in the order in which products are collected (when compared with the prior art methods). However, this may be ensured by other processes (e.g. material provision) and may or may not be interconnected with the packaging proposal.

As shown in Figure 5, it is proposed to gather historic, i.e. past, purchase orders and related packaging information in order to train an artificial intelligence such as a machine learning model ML. The machine learning model ML may then be used to infer the most suitable packaging material and output a proposal for a packaging to be used for the purchase order, e.g., the proposal may be displayed to the employee.

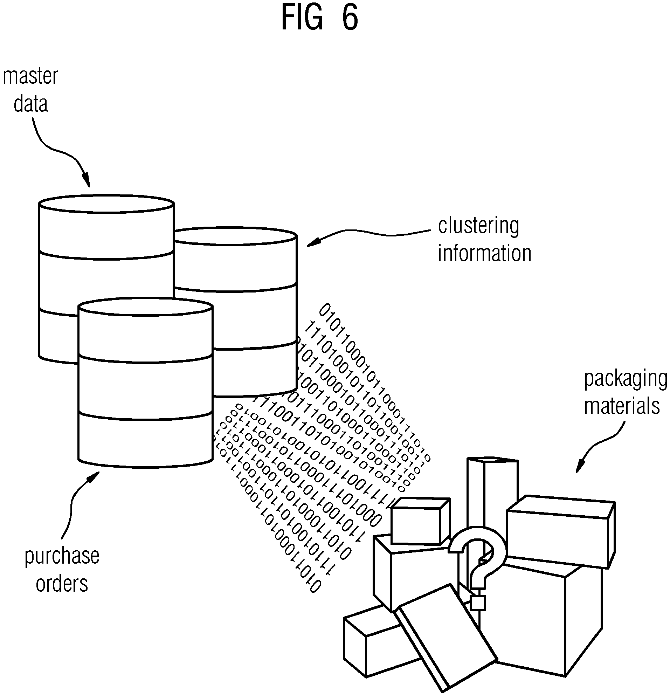

As can be seen in Figure 6 packaging of different sizes, e.g. cardboard containers of different sizes may be available in the production facility or the logistic facility. In order to select the most suitable packaging use is made of the master data relating to the one or more products of a purchase order. Furthermore, clustering information, as will be described in more detail below, may be used for training a machine learning model and for inferring a packaging, e.g., from the one or more cardboard containers available.

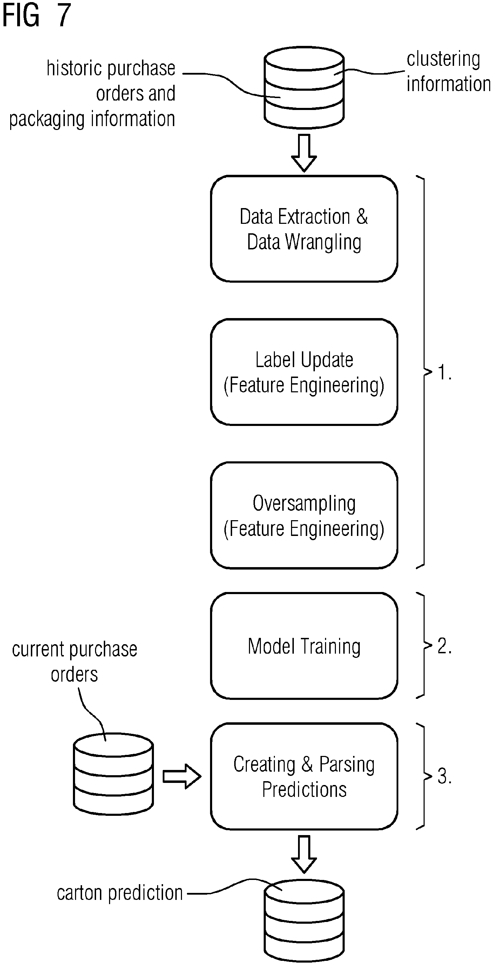

Now turning to Fig. 7 training of and inference by a machine learning model is described. The machine learning model may be based on historic data such as historic purchase orders from the past. The period for historic data is considered may be set to about 1 year in the past. In theory, however, the period may be unlimited. In addition, clustering information may be used. The following data may thus be used for training and/or inferring a packaging, e.g., a cardboard container, for one or more products:
- one or more product numbers
- quantity per product number
- formerly used transport packaging
- product numbers and corresponding sizes
- product numbers and corresponding weights.
- clustering table with material numbers for size classification (external dimensions of material packaging)
- clustering table with material numbers for weight classification (range).

It should be understood that not all of the data mentioned in the above is present and/or available and that therefore for the purpose of training and/or inferring a suitable packaging only part of this data is used. In particular, not all products have all the data mentioned in the above available, but only part of the data may be available. In that case the available data is used. In the other case, where the complete master data of the one or more products is required the situation would become cumbersome again in order to obtain all of the data elements.

The machine learning model may be part of a software, also denoted as software program, computer program etc., that may be installed and run in the production facility or the logistic facility. The software may run on a server on the production and/or logistics facilities intranet. The server may access the data warehouse, generates packaging suggestions, and may write them back to the data warehouse. A software mask may read the packaging suggestions from the data warehouse and may displays them, e.g. at a packaging station, in the logistic facility.

The machine learning model may be generated and used in the following way, cf. curled brackets in Figure 7:
1. Data Extraction, Data Wrangling: First, the necessary training data set needs to be extracted and processed data. To this end, data extraction, data wrangling and feature engineering is necessary which will be explained in more detail below.
2. Second, the machine learning model needs to be trained based on the training data.
3. Third, the trained machine learning model is deployed, i.e. the trained model is able to infer a packaging.

### 1. Data Extraction, Data Wrangling:

Data about past shipments or deliveries, that is for example stored in a database, as well as information about a clustering of products may be extracted. To this end a software script may be used that parses the data in the database.

The clustering may comprise grouping of products of similar size are together into one cluster. The clustering may be carried out by one or more process experts and is based on similarities in size, shape and weight. For example, a cluster for software, a cluster for cables, a cluster for small motors may be created. For this purpose, individual product numbers may be assigned to clusters, wherein the product numbers represent the actual products. Thereby it is not necessary to obtain detailed master data of the individual products, which would require high effort, in order to provide the (optimal shipping) packaging. The clustering information may then be associated with a purchase order or delivery note for the respective one or more products. Additionally, the data extracted may be transformed into a format suitable for a machine learning model. As an example, the data after this step may look as follows:

| *purchase order number* | *Cluster 1* | *Cluster 2* | ... | *Cluster N* | *packaging* |
|---|---|---|---|---|---|
| *1234* | *1* | *0* | ... | *3* | *carton 5* |
| *1235* | *0* | *2* | ... | *1* | *carton 1 + 5* |
| *1236* | *0* | *2* | | *1* | *carton 1* |

For example, purchase order number 1234 contains one product number assigned to cluster 1 and three product numbers assigned to cluster number 3 and was packaged in carton type 5. The Cluster 1-N columns in the table above are features of a purchase order, and the packaging column is the label based on which the machine learning model may be trained.

Clustering information may be based on expert knowledge regarding the size of products (various pre-packaging) and/or, if available, on the weight of the products. Product numbers without sizes and weight information may be assigned to a "no-information cluster". It should be noted that the size-based clusters may have been manually fed into a database, whereas weight information may have been extracted from existing databases. Approximately 90 % of all purchase orders do not contain product numbers that are associated with the "no-information cluster".

Now an updating of the labeling is described in more detail. There is a possibility that in the past the same combination of material numbers was packaged differently (cf. the table above: delivery note No. 1235 & delivery note No. 1236). Some packaging can be identified as clearly suboptimal. For example, packaging that uses a smaller number of cartons for the same input combination is generally preferred to packaging that uses a higher number of cartons. In the example above, this means that the packaging used for packing purchase order number 1236 is "better" than the packaging used for delivery note number 1235. To avoid the machine learning algorithm being trained on suboptimal packaging and prediction, a computer program, e.g., in the form of a script, may replace these packaging labels.

Furthermore, for each combination of product numbers of a delivery note (in this case not on a cluster basis), the computer program may store the best label to date, so that it can be used in a later step for prediction (without the artificial intelligence of the machine learning model). The best label is the label that generates the lowest costs.

As an example, the data set after this process step looks like this:

| *Lieferscheinnummer* | *Cluster 1* | *Cluster 2* | ... | *Cluster N* | *Verpackung* |
|---|---|---|---|---|---|
| *1234* | *1* | *0* | ... | *3* | *Karton 5* |
| *1235* | *0* | *2* | ... | *1* | *Karton 1* |
| *1236* | *0* | *2* | | *1* | *Karton 1* |

The packaging label of delivery note 1235 has been replaced by "Carton 1".

Since few packaging labels make up the majority of the data set, there is a risk that optimizing the machine learning model will result in (almost) exclusively these few labels being predicted. To prevent this, this a software program, which may be part of the above mentioned script, may use one or more oversampling methods (Random Oversampling, ADASYN, SMOTE) to balance the distribution of labels and enrich the data set.

2. Now turning into more detail to the training of the machine learning model. The software program, e.g., said script, may use the data set described above as input and in order to train the machine learning model, e.g., one or more, preferably three, Random Forest methods. The one or more Random Forests may be trained on all data and predicts whether the purchase order should be packed in a carton or in a combination of cartons, on data for which a single carton was used, and/or on data for which a combination of cartons was used. The data may be divided into one or more training, one or more test and one or more validation sets and the best hyperparameters are determined by cross-validation. After that, the optimal hyperparameters are used to train the final machine learning models on all data.

3. Now turning to the deployment of the machine learning model. Inference and provision of the carton proposal (application of the model, parsing of proposals) is described in more detail. To that end, inference and parsing of predictions is performed. The predictions inferred by the software program, preferable the script as mentioned in the above, are based on information comprised in the one or more purchase orders received. The prediction may be done in two steps: First, already known input combinations, i.e. product numbers for which a packaging has been assigned manually, cf. the label update in the above, are provided with this prediction. In a second step, a machine learning model infers a prediction for previously unknown input combinations, e.g., an unknown combination of product numbers. A hierarchical model may be used for this purpose. First, the input data may be used to predict whether a single carton, or a combination of cartons should be used for packaging the purchase order. In a further step the one or more purchase orders are separated using the information from the previous step (a single carton vs. multiple cartons) and the predictions for individual cartons or carton combinations are determined.

The optimization of the machine learning algorithm is ensured by the fact that the employee is instructed to disregard a suboptimal carton proposal and, if necessary, to use a different packaging. If this happens for input combinations already known, the recommended packaging will be overwritten in the next run of the "Label Update" part of the software program. This means that the next time this combination is found, the new, more optimal packaging will be proposed. The machine learning model's prediction of packaging for unknown input combinations improves with each new packaging information (acceptance/rejection of proposals for new and seen combinations) as the training record is enriched with this information.

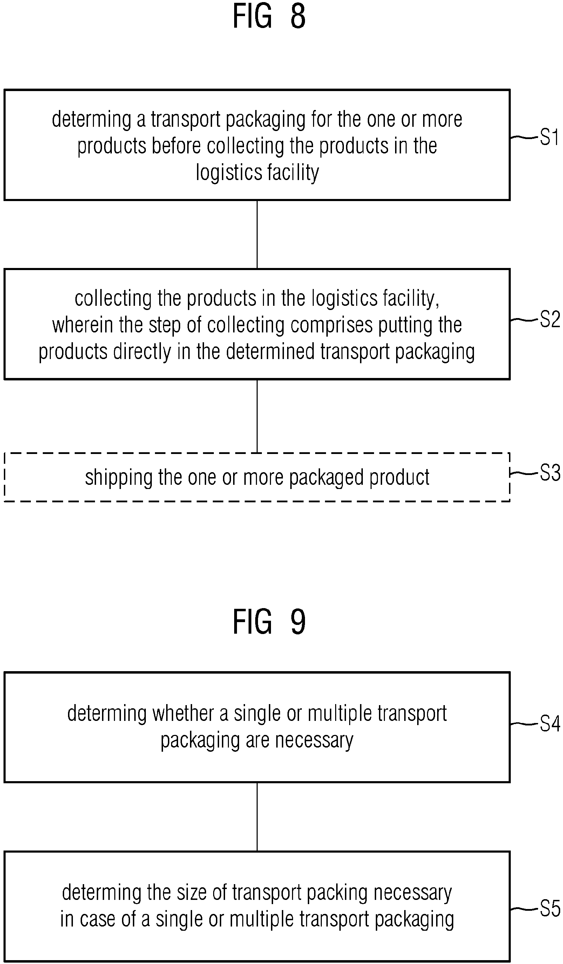

Turning to Figure 8, exemplary method steps are shown. In a first step S1, e.g. after receiving a purchase order, a (transport) packaging for the one or more products may be determined before collecting the products in the logistics facility. The transport packaging may be determined using a machine learning model as described in the above, e.g. as a result of the purchase order being input into the machine learning model the machine learning model may infer a packaging. The packaging determined may then be proposed/recommended to an employee.

In a step S2 the products may then be collected in the logistics facility, wherein the step of collecting comprises putting the products directly in the determined (transport) packaging. The packaging itself may be retrieved by the employee and be placed on or in a cart which serves for collecting the products.

In a step S3 the one or more packaged products may be shipped.

Turning to Figure 9, further exemplary method steps are shown. In a step S4 it is determined whether a single or multiple transport packaging are necessary. In a step S5 in case of a single or multiple transport packaging the size of transport packing necessary is determined. It should be understood that steps S4 and S5 may be part of step S1 of determining a transport packaging for the one or more products before collecting the products in the logistics facility. Furthermore, it should be understood that steps S4 and S5 may be combined in a single step by way of which the number of transport packaging AND the corresponding size of the individual (transport) packaging is determined. The steps S1, S4 and S5 may be performed by a (trained) machine learning model, e.g., as described in the above.

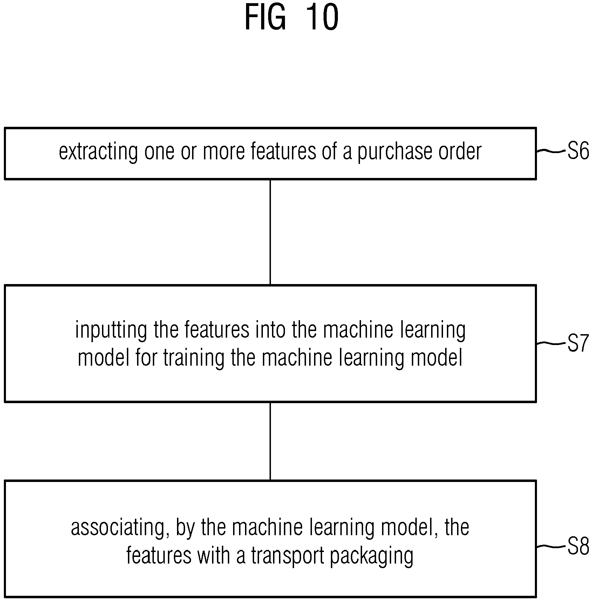

Turning to Figure 10, still further exemplary method steps are shown. In a step S6 one or more features of a purchase order are extracted. For example, the purchase order is processed electronically or may be converted into an electronic format. In a subsequent steps S7, the (extracted) features may be input into a machine learning model for the purpose training the machine learning model or for the purpose of inferring a packaging by the machine learning model. In a subsequent step S8 the features are associated, by the machine learning model, with a (transport) packaging. The packaging determined may then be used for delivery or shipping the one or more products, e.g. according to step S2 and S3.

The proposed method and systems provide the following advantages:
- Avoidance of effort for the generation, procurement and maintenance of master data.
- Avoidance of effort to collect dynamic data (e.g. caused by packaging variance by supplier).
- Reuse of data generated in real processes (packaging material used).
- Preservation of employee knowledge in data base >> self-learning system.
- No manual loops to improve the software >> employee trains and optimizes algorithm.
- Standardization in the use of packaging material possible (specification of the packaging material).
- Prediction of the upcoming consumption of packaging materials possible.
- Enabler for automation of the packaging process.

The standardization may lead to lower packaging material costs, e.g., as a suitable cardboard may be chosen, and for example only one carton instead of two cartons is used. In addition, less filling material is used. Additional advantages comprise: Effort reduction for the employee (waste of repacking, double handling, running paths).

## Claims

1. Method of optimizing logistics of one or more products (D1-D5), preferably of different sizes, in a logistics facility (L), e.g., within a production facility (F), comprising:
receiving a purchase order for the one or more products (D1-D5),
determining a transport packaging (P) for the one or more products (D1-D5) before collecting the products (D1-D5) in the logistics facility (L), and subsequently
collecting the products (D1-D5) in the logistics facility (L), wherein the step of collecting comprises putting the products (D1-D5) directly in the determined transport packaging (P).

2. The method of the preceding claim,
wherein the transport packaging (P) is determined based on at least one trained machine learning model (ML), wherein the at least one trained machine learning model (ML) associates the transport packaging (P) with the purchase order.

3. The method according to any one of the preceding claims, wherein, preferably in case of feature values unknown from training the machine learning model (ML), associating comprises firstly determining whether a single or multiple transport packaging (P) are necessary and
determining the size of transport packing (P) necessary in case of a single or multiple transport packaging (P), respectively, and/or
wherein, preferably in case of feature values known from training the machine learning model (ML), associating comprises assigning the transport packaging (P) from training the machine learning model (ML) to the purchase order.

4. The method according to any one of the preceding claims, retraining the machine learning model (ML) by overwriting an associated sub-optimal transport packaging (P).

5. A method of training a machine learning model (ML) for associating a transport packaging (P) with a purchase order, comprising:
extracting one or more features of a purchase order and inputting, for training the machine learning model (ML), the one or more features into the machine learning model (ML) for associating the features with a transport packaging (P).

6. The method according to claim 5 wherein one or more of the following features are input into the machine learning model:
- one or more product numbers
- quantity per product number
- formerly used transport packaging
- product numbers and corresponding sizes
- product numbers and corresponding weights.

7. The method according to claim 5 or 6, wherein the one or more transport packagings (P) are provided which serve as possible classifications for the features input into the machine learning model (ML).

8. The method according to claim 5, 6 or 7, wherein in case of identical features for different purchase orders, e.g. different purchase order numbers, the classification using less transport packaging (ML) is chosen for training the machine learning model (ML), and/or
wherein for identical features and/or feature sets the classification using less transport packaging is chosen for training the machine learning model (ML).

9. The method according to any one of claims 5 to 8, comprising: resampling, over-sampling and/or under-sampling, preferably randomly, the features of one or more purchase orders, e.g. according to a degree of imbalance of the features in the purchase orders.

10. The method according to any one of claims 5 to 9, wherein a first machine learning model, preferably a first random forest, is trained in order to determine whether either multiple transport packagings (P) are necessary for packaging the one or more products or whether a single transport package is necessary for packaging the one or more products of a purchase order.

11. The method according to any one of claims 5 to 10 wherein a second machine learning model (ML), preferably a second random forest, is trained in order to determine which transport packaging is necessary in case a single transport packaging (P) is necessary.

12. The method according to any one of claims 5 to 11 wherein a third machine learning model, preferably a third random forest, is trained in order to determine which transport packaging (P) is necessary in case multiple transport packagings (P) are necessary.

13. The method according to any one of claims 5 to 12, wherein the first, second and third machine learning model (ML) are combined into a machine learning model (ML).

14. A computer program product, comprising program code that when executed
performs any one of the steps of claims 1 to 4 or claims 5 to 13.

15. A packaging station in a logistics facility (L), preferably comprising a processor and a memory, the memory comprising instructions to be executed by the processor for providing a packaging recommendation according to anyone of claims 1 to 4.
